# FASCICULE DE BREVET EUROPEEN

(11) **EP 3 934 922 B1**
(45) Date de publication et mention de la délivrance du brevet: **22.02.2023**
(21) Numéro de dépôt: 20726885.5
(22) Date de dépôt: 04.03.2020
(51) Int. Cl.: B60C 11/12, B60C 11/03

(54) **PNEUMATIQUE COMPORTANT UNE BANDE DE ROULEMENT**
REIFEN MIT LAUFSTREIFEN
TYRE COMPRISING A TREAD PORTION

(30) Priorité: 04.03.2019 FR 1902181
(43) Date de publication de la demande: 12.01.2022
(73) Titulaire: COMPAGNIE GENERALE DES ETABLISSEMENTS MICHELIN, 63000 Clermont-Ferrand (FR)
(72) Inventeur: JOSEPH, Aurelie, 63040 CLERMONT-FERRAND Cedex 9 (FR); GUILHEM, Sébastien, 63040 CLERMONT-FERRAND Cedex 9 (FR)
(74) Mandataire: Boyer, Chris Michel
(86) Numéro de dépôt international: PCT/FR2020/050434
(87) Numéro de publication internationale: WO 2020/178524

(56) Documents cités:
- EP-A1- 2 505 387
- EP-A1- 2 505 387
- EP-A1- 3 162 593
- EP-A1- 3 162 593
- WO-A1-2014/003033
- WO-A1-2014/003033
- JP-A- H11 301 217
- JP-A- H11 301 217

## Description

La présente invention concerne un pneumatique pour véhicule automobile, et plus particulièrement un pneumatique dont l'usure en fonctionnement est mieux maitrisée. L'invention n'est pas limitée à un type particulier de véhicule et elle peut s'appliquer à pneumatique pour véhicule automobile appartenant à une liste de différents types de véhicules automobiles tels qu'un véhicule de tourisme, une camionnette, un poids lourd, un véhicule agricole, un véhicule génie-civil ou un véhicule à deux roues, etc.

De manière connue, un pneumatique destiné à équiper un véhicule automobile comporte une bande de roulement. Cette bande de roulement comprend une surface de roulement et deux bords délimitant ladite surface de roulement. La surface de roulement correspond à l'ensemble des points de la bande de roulement qui entrent en contact avec une chaussée lorsque le pneumatique, gonflé à sa pression de référence et écrasé par une charge de référence, roule sur cette chaussée. La pression de gonflage de référence et la charge de référence sont définies dans les conditions d'utilisation du pneumatique, conditions précisées notamment par la norme E.T.R.T.O. La surface de roulement de la bande de roulement comprend des creux formés par diverses rainures, telles que des rainures circonférentielles. Les rainures circonférentielles constituent des canaux destinés à évacuer l'eau lors d'un roulage sur une chaussée mouillée. De la même manière, la bande de roulement peut comprendre une pluralité de rainures transversales s'étendant respectivement en deux séries de rainures transversales le long des deux bords de la bande de roulement. Les rainures transversales facilitent également l'évacuation de l'eau sur les bords de la bande de roulement. Il est connu du document FR3026347 de pourvoir chaque rainure transversale avec un fond qui en rejoignant une extrémité de ladite rainure transversale sur la surface de roulement de la bande de roulement, forme une paroi inclinée. Cette paroi inclinée est généralement disposée à proximité d'une rainure circonférentielle de sorte à favoriser l'évacuation de l'eau hors de la bande de roulement vers l'autre extrémité opposée de la rainure transversale, à proximité d'un bord de la bande de roulement. Deux rainures transversales adjacentes délimitent un bloc de gomme sur la bande de roulement. Ce bloc de gomme présente une certaine rigidité qui est fonction, notamment, des dimensions de ce bloc de gomme et de la dureté du mélange caoutchouteux constituant ledit bloc. Pour améliorer l'adhérence du pneumatique, et plus particulièrement pour améliorer cette adhérence sur une chaussée humide, il est connu de pourvoir le bloc de gomme avec au moins une incision transversale. Cette incision transversale, dont la trace sur la surface de la bande de roulement peut être parallèle aux rainures transversales, apporte une certaine flexibilité au bloc de gomme, ce qui diminue ainsi globalement la rigidité de ce bloc de gomme. Cependant, il a été constaté que la présence des incisions transversales dans les blocs de gomme était susceptible de générer une usure irrégulière de la bande de roulement dans les zones de la surface de roulement à proximité des bords de ladite bande de roulement.

Une bande de roulement selon le préambule de la revendication 1 est conue du document EP2505387 A1 ou EP3162593 A1.

Il existe donc un besoin d'obtenir un pneumatique présentant une plus grande uniformité en usure.

La présente invention vise à remédier à cet inconvénient.

Plus particulièrement, la présente invention vise à améliorer la régularité de la forme d'usure d'une bande de roulement d'un pneumatique dont l'adhérence sur une chaussée humide est augmentée par la présence d'incisions transversales à proximité des bords de cette bande de roulement.

L'invention concerne un pneumatique comportant une bande de roulement délimitée par deux bords. La bande de roulement comprend une rainure circonférentielle et une pluralité de rainures transversales, chaque rainure transversale s'étendant d'un des bords de la bande de roulement jusqu'à une première extrémité de ladite rainure transversale. Au moins une rainure transversale de la pluralité de rainures transversales comporte un fond rejoignant la première extrémité en formant une première paroi inclinée. La bande de roulement comprend une incision transversale disposée entre deux rainures transversales. Cette incision transversale s'étend à partir de la rainure circonférentielle jusqu'à une seconde extrémité de ladite incision transversale.

Selon une caractéristique générale du pneumatique, l'incision transversale comporte un fond rejoignant la seconde extrémité en formant une seconde paroi inclinée. La seconde paroi inclinée croise la première paroi inclinée dans un plan de coupe et selon une projection desdites parois inclinées dans ce plan de coupe.

Par « pneumatique », on entend tous les types de bandages élastiques soumis à une pression interne ou non.

Par « bande de roulement » d'un pneumatique, on entend une quantité de matière caoutchoutique délimitée par deux surfaces principales dont l'une, appelée surface de roulement, est destinée à entrer en contact avec une chaussée lorsque le pneumatique roule dans les conditions usuelles de roulage du pneumatique. Par « conditions usuelles » de roulage du pneumatique on entend les conditions d'utilisation définies par la norme E.T.R.T.O.. Ces conditions d'utilisation précisent la pression de gonflage de référence et la charge de référence qui correspondent à la capacité de charge du pneu indiquée par son indice de charge et son code vitesse. Ces conditions d'utilisation peuvent aussi être dites « conditions nominales » ou « conditions d'usage ». La surface de roulement est alors délimitée par deux bords de la bande de roulement au-delà desquels les parties de pneumatique ne sont pas en contact avec la chaussée dans les conditions usuelles de roulage du pneumatique. Le pneumatique comprend ainsi la bande de roulement, deux surfaces latérales appelées également flanc, et deux parties intermédiaires disposées respectivement entre un flanc et la bande de roulement. Ces parties intermédiaires sont également appelées zones épaules du pneumatique. Ces parties intermédiaires ne sont pas en contact avec la chaussée dans les conditions usuelles de roulage du pneumatique.

Par « rainure », on entend une découpure générant des parois de matière opposées en vis-à-vis. La distance entre les parois de matière de la rainure est telle que ces parois ne peuvent pas venir en contact l'une contre l'autre dans les conditions usuelles de roulage. A titre d'exemple, il peut être décidé que la distance entre deux parois d'une rainure est supérieure à 2 millimètres (mm).

Par « incision », on entend une découpure générant des parois de matière opposées en vis-à-vis. La distance entre les parois de matière de l'incision est appropriée pour permettre la mise en contact, au moins partiellement, de ces parois lors du passage dans l'empreinte de contact avec la chaussée. A titre d'exemple, il peut être décidé que la distance entre deux parois d'une incision est inférieure ou égale à 2 millimètres (mm).

Par « rainure transversale » ou « incision transversale », on entend une rainure ou incision dont la trace sur la surface de roulement de la bande de roulement s'étend globalement selon une direction transversale, c'est-à-dire selon une direction qui est parallèle à l'axe de rotation du pneumatique. Par « s'étend globalement selon une direction transversale », on entend que chaque incision transversale, respectivement chaque rainure transversale, fait un angle inférieur ou égal à 30° avec ladite direction transversale.

Par « direction circonférentielle », on entend une direction qui est tangente à tout cercle centré sur l'axe de rotation du pneumatique. La direction circonférentielle est perpendiculaire à la direction transversale.

Par « direction radiale », on entend une direction qui est perpendiculaire à l'axe de rotation du pneumatique (cette direction correspond à la direction de l'épaisseur de la bande de roulement).

Dans la suite de la description, la direction circonférentielle est notée X, la direction transversale est notée Y et la direction radiale est notée Z. Ces trois directions font parties d'un repère orthonormé.

Par « plan de coupe radial», on entend ici tout plan s'étendant selon une direction radiale et selon une direction transversale et passant par l'axe de rotation du pneumatique.

Par « projection » de la paroi inclinée selon un plan de coupe radial, on entend une projection orthogonale de cette paroi inclinée dans ce plan de coupe selon une certaine distance de projection.

La première paroi inclinée de la rainure transversale et la seconde paroi inclinée de l'incision transversale délimitent des éléments de matière caoutchoutique qui vont venir rigidifier le bloc de gomme à la base de cette rainure ou de cette incision. En croisant les parois inclinées, c'est-à-dire en faisant en sorte que lorsque la première paroi inclinée atteint un point haut, la seconde paroi inclinée atteint un point bas, et inversement, on continue à apporter une certaine flexibilité aux blocs de gomme tout en diminuant la variation de rigidité selon la direction transversale dans les zones de la surface de roulement disposées entre l'incision transversale et les rainures transversales adjacentes. L'usure irrégulière dans ces zones est alors limitée.

Selon un mode de réalisation particulièrement avantageux, la première paroi inclinée et la seconde paroi inclinée se croisent à une hauteur H déterminée par rapport à une surface de roulement de la bande de roulement, avec 0,2*P≤H≤0,8*P où P est la profondeur de la rainure et H une mesure déterminée entre le point de croisement des parois inclinées et la surface de roulement de la bande de roulement selon une direction radiale.

Avantageusement, la première paroi inclinée et la seconde paroi inclinée font respectivement un angle α1 et un angle α2 avec une direction transversale, l'angle α1 et l'angle α2 étant supérieurs ou égaux à 20° et inférieurs ou égaux à 70°. Les angles α1 et α2 sont alors mesurés dans le plan de coupe radial dans lequel la projection des parois inclinées est réalisée. En pratique pour mesurer les angles α1 et α2, il est possible de faire une entaille dans le pneumatique au niveau du plan de coupe radial. Les angles α1 et α2 sont mesurés avec un écartement entre les bourrelets des flancs correspondant à une largeur de jante de mesure de référence telle que définie par la norme ETRTO.

Avantageusement, l'angle α1 et/ou l'angle α2 est (sont) supérieur(s) ou égal (aux) à 30° et inférieur(s) ou égal (aux) à 35°.

Avantageusement, l'angle α1 est sensiblement identique à l'angle α2.

Dans un mode de réalisation particulier, le pneumatique comporte une incision intermédiaire reliant la première paroi inclinée de la rainure transversale à la rainure circonférentielle. L'incision intermédiaire apporte une flexibilité supplémentaire dans le bloc de gomme. La présence d'une incision intermédiaire faisant la liaison entre la rainure transversale et la rainure circonférentielle permet de régler plus finement le gradient de rigidité dans le bloc de gomme. Avantageusement, l'incision intermédiaire a une profondeur P' inférieure ou égale à 25% de la profondeur P de la rainure. On évite ainsi d'avoir une incision intermédiaire trop profonde, par exemple une incision avec une profondeur P' égale à la profondeur P, et ceci afin de limiter la perte de rigidité du bloc de gomme.

Dans un mode de réalisation particulier, la pluralité des rainures transversales a une largeur comprise entre 3,5 mm et 5,5 mm.

Avantageusement, la pluralité de rainures transversales comprend au moins deux types de rainures transversales présentant deux largeurs différentes, la différence entre ces deux largeurs étant d'au moins 15 %. La différence de largeur entre les deux types de rainures transversales permet de moduler les longueurs de blocs selon la direction circonférentielle. De cette manière, on améliore le niveau de bruit global du pneumatique en fonctionnement en évitant l'émergence d'un pic de fréquence de vibration dans ce pneumatique. Dans un mode de réalisation particulier, l'incision transversale a une largeur comprise entre 0,4 mm et 1,2 mm, préférentiellement entre 0,6 mm et 0,8 mm.

Dans un mode de réalisation particulier, le pneumatique comporte au moins un plot de contact faisant protubérance à partir d'une paroi latérale de l'incision transversale. Le plot de contact est rapidement actif lors de la fermeture de l'incision transversale dans l'aire de contact du pneumatique, notamment quand le pneumatique subit un couple moteur. Ce plot de contact permet d'améliorer la rigidité du bloc de gomme au cours du roulage et de limiter les déformations dudit bloc de gomme. Les dimensions données au plot de contact, le nombre de plots de contact permettent d'ajuster plus finement le gain en rigidité dans ledit bloc de gomme.

La présente invention sera mieux comprise à la lecture de la description détaillée de modes de réalisation pris à titre d'exemples nullement limitatifs et illustrés par les dessins annexés sur lesquels :
La Figure 1 est une vue en perspective d'une partie d'un pneumatique comprenant une bande de roulement selon un premier mode de réalisation de l'invention.
La Figure 2 Lest une vue schématique agrandie d'une partie du pneumatique de la figure 1.
La Figure 3 est une vue schématique selon une coupe A-A de la partie du pneumatique de la figure 2.
La Figure 4 est une vue d'un pneumatique selon un second mode de réalisation.
La Figure 5 est une vue d'un pneumatique selon un troisième mode de réalisation.

L'invention n'est pas limitée aux modes de réalisation et variantes présentées et d'autres modes de réalisation et variantes apparaîtront clairement à l'homme du métier.

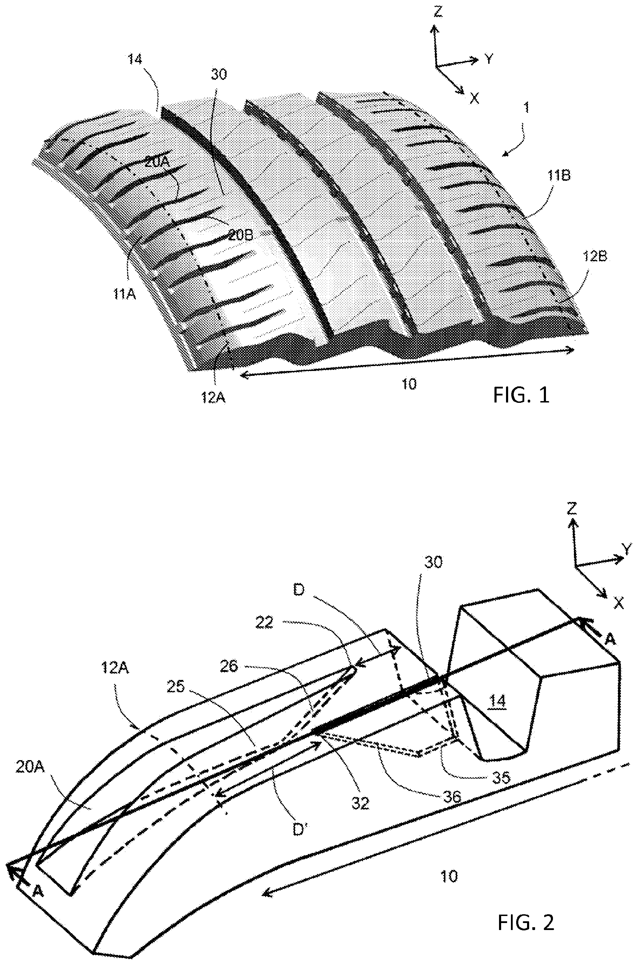

Sur la figure 1 est représenté partiellement un pneumatique 1. Le pneumatique 1 comprend une bande de roulement 10 et deux zones épaules 11A, 11B. Comme il a déjà été précisé, la bande de roulement 10 comporte une surface de roulement. Cette surface de roulement regroupe l'ensemble des points de la bande de roulement qui vont entrer en contact avec une chaussée au cours d'un roulage du pneumatique 1, dans les conditions usuelles de roulage de ce pneumatique 1. Les deux zones épaules 11A, 11B ne sont pas destinées à entrer en contact avec la chaussée. Ces deux zones épaules 11A, 11B délimitent deux bords respectifs 12A, 12B avec la bande de roulement. En pratique, il est possible de déterminer les bords 12A, 12B de la bande de roulement 10 à partir d'empreintes d'un pneumatique réalisées sur un support, ledit pneumatique ayant été préalablement encré et monté sur une machine de test adaptée pour reproduire les conditions usuelles de roulage de ce pneumatique 1. Les deux zones épaules 11A, 11B sont prolongées par des flancs respectifs (non représentés sur la figure 1) qui forment les parties latérales du pneumatique 1. Chaque flanc comporte à son extrémité un bourrelet. Ce bourrelet est destiné à prendre assise sur une jante d'une roue.

La bande de roulement 10 comprend une pluralité de rainures circonférentielles 14 qui s'étendent sur toute la circonférence du pneumatique. Ces rainures circonférentielles 14 délimitent des nervures de matière. Par « nervure de matière », on entend un bloc de matière dont la longueur selon la direction circonférentielle est très supérieure à sa largeur, mesurée selon la direction transversale. A titre d'exemple non limitatif, la bande de roulement 10 de la figure 1 comprend trois rainures circonférentielles 14 qui délimitent quatre nervures de matière. Parmi ces quatre nervures de matière, deux nervures, dites « nervures centrales » sont disposées au plus proche du centre de la bande de roulement et deux autres nervures, dites « nervures à l'épaule » sont disposées aux extrémités axiales de la bande de roulement 10 à proximité des bords 12A, 12B. Chaque nervure à l'épaule comprend une pluralité de rainures transversales 20A, 20B et une pluralité d'incisions transversales 30. Chaque rainure transversale 20A, 20B s'étend d'un des bords 12A, 12B de la bande de roulement 10 vers une première extrémité 22 de ladite rainure transversale 20A, 20B. Dans l'exemple de réalisation des figures 1 et 2, la première extrémité 22 de la rainure transversale 20A, 20B ne débouche pas dans la rainure circonférentielle 14. Il existe ainsi une certaine distance D, non nulle, entre cette première extrémité 22 de la rainure transversale 20A, 20B et ladite rainure circonférentielle 14. Comme il est illustré plus particulièrement à la figure 2, la rainure transversale 20A comporte un fond qui rejoint la première extrémité 22. Ce fond comprend une première partie 25 qui suit globalement la courbure générale du pneumatique et une première paroi inclinée 26. Cette première paroi inclinée 26 s'étend ainsi de la première partie 25 du fond de la rainure transversale 20A jusqu'à la première extrémité 22 de ladite rainure transversale 20A.

Chaque rainure transversale 20A, 20B a une largeur comprise entre 3,5 mm et 5,5 mm. Cette largeur est déterminée entre les deux parois latérales délimitant la rainure transversale 20A, 20B et elle est mesurée à la moitié de la profondeur dans ladite rainure transversale 20A, 20B. La largeur de la rainure transversale 20A est identique à la largeur de la rainure transversale adjacente 20B. Dans un mode de réalisation alternatif, la largeur de la rainure transversale 20A est différente de la largeur de la rainure transversale 20B et la différence entre ces deux largeurs est d'au moins 15%. Ainsi à titre d'exemple, si la largeur de la rainure transversale 20A est de 3,6 mm, la largeur de la rainure transversale adjacente 20B est supérieure ou égale à 4,14 mm.

L'incision transversale 30 a une largeur comprise entre 0,4 mm et 1 mm. Cette largeur est déterminée entre les deux parois latérales délimitant ladite incision transversale 30. Cette largeur est mesurée à la moitié de la profondeur de ladite incision transversale 30. Préférentiellement, la largeur de l'incision transversale 30 est comprise entre 0,6 mm et 0,8 mm.

Dans le mode de réalisation de la figure 1, chaque incision transversale 30 de la pluralité d'incisions transversales 30 est disposée entre deux rainures transversales 20A, 20B. Plus particulièrement, chaque rainure transversale 30 s'étend à partir de la rainure circonférentielle 14 en débouchant dans cette rainure circonférentielle 14. Ainsi, chaque incision transversale 30 s'étend en direction d'un des bords 12A, 12B de la bande de roulement 10 jusqu'à une seconde extrémité 32 de ladite incision transversale 30. Dans l'exemple de réalisation des figures 1 et 2, la seconde extrémité 32 de l'incision transversale 30 ne débouche pas au niveau d'un des bords 12A, 12B. Il existe alors une distance D', non nulle, entre cette seconde extrémité 32 de l'incision transversale 30 et l'un desdits bords 12A, 12B. Comme il est illustré plus particulièrement à la figure 2, l'incision transversale 30 comporte un fond qui rejoint la seconde extrémité 32. Ce fond comprend une première partie 35 qui suit globalement la courbure générale du pneumatique et une seconde paroi inclinée 36. Cette seconde paroi inclinée 36 s'étend ainsi de la première partie 35 du fond de l'incision transversale 30 jusqu'à la seconde extrémité 32 de ladite incision transversale 30.

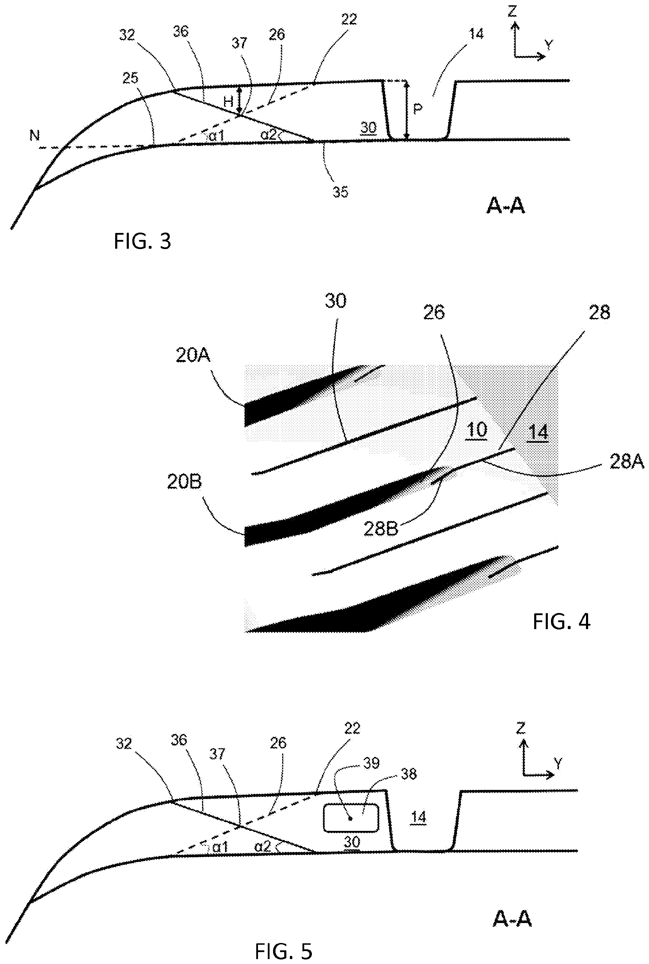

La figure 3 est une vue schématique dans un plan de coupe radial A-A d'une partie du pneumatique de la figure 2. Le plan de coupe radial A-A est ici confondu avec le plan moyen d'une incision transversale 30, ce plan moyen s'étendant dans la longueur de cette incision transversale 30 en divisant ladite incision transversale 30 en deux demi-incisions transversales. La première paroi inclinée 26 est ainsi représentée selon un trait en pointillé. Ce trait en pointillé correspond à une projection de la première paroi inclinée 26 dans le plan de coupe radial A-A, selon une distance de projection non nulle. De plus, la seconde paroi inclinée 36 est représentée selon un trait plein dans cette figure 3. Ce trait plein correspond à une coupe de la seconde paroi inclinée 36 par le plan de coupe radial A-A. Dit autrement, le trait plein correspond à la projection de la seconde paroi inclinée 36 dans le plan de coupe radial A-A, selon une distance de projection nulle.

La première paroi inclinée 26 fait un angle α1 avec la direction transversale Y. Plus précisément, l'angle α1 est déterminé entre le niveau N du fond de la rainure circonférentielle 14 et la première paroi inclinée 26, selon un sens trigonométrique. La première paroi inclinée 26 délimite de la matière caoutchoutique avec le niveau N du fond de la rainure et c'est l'angle α1 qui détermine l'importance de cette matière caoutchoutique dans la rainure transversale 20A. De la même manière, sur la figure 3, l'angle α2 est déterminé entre le niveau N du fond de la rainure circonférentielle 14 et la seconde paroi inclinée 36, selon un sens anti-trigonométrique. La seconde paroi inclinée 36 délimite de la matière caoutchoutique avec le niveau N du fond de la rainure circonférentielle 14 et c'est l'angle α2 qui détermine l'importance de cette matière caoutchoutique dans l'incision transversale 30. La première paroi inclinée 26 et la seconde paroi inclinée 36 se rencontrent en un point 37. Ainsi, entre la seconde extrémité 32 de l'incision transversale 30 et le point 37, c'est la matière caoutchoutique présente dans l'incision transversale 30 qui apporte majoritairement un surplus de rigidité et entre le point 37 et la première extrémité 22 de la rainure transversale 20A, c'est la matière caoutchoutique présente dans la rainure transversale 20A qui apporte majoritairement ledit surplus de rigidité. En fonction des valeurs données aux angles α1 et α2, on détermine la hauteur H du point 37. En ajustant cette matière caoutchoutique dans la rainure transversale et dans l'incision transversale, on limite les variations de rigidité dans le bloc de gomme entre la seconde extrémité 32 de l'incision transversale 30 et la première extrémité 22 de la rainure transversale 20A. Dans un mode de réalisation particulier, la hauteur H du point 37 est déterminée de sorte que 0,2*P≤H≤0,8*P où P est la profondeur de la rainure circonférentielle 14. Par « profondeur P de la rainure circonférentielle 14 », on entend la profondeur maximale dans cette rainure circonférentielle. Conformément à ce qui est illustré à la figure 3, la hauteur H est déterminée, selon une direction radiale Z, entre la surface de roulement de la bande de roulement 10 et le point 37. De manière préférentielle, cette hauteur H correspond à la moitié de la profondeur P de la rainure circonférentielle 14. La hauteur H entre le point 37 et la surface de roulement peut être ajustée via les valeurs prises par les angles α1 et α2. Dans un mode de réalisation particulier, les angles α1 et α2 sont supérieurs ou égaux à 20° de sorte à assurer une pente minimale aux surfaces inclinées 26, 36 pour favoriser l'évacuation de l'eau hors de la bande de roulement. Ceci est particulièrement intéressement pour une bonne évacuation de l'eau vers les bords 12A et 12B par les rainures transversales 20A, 20B. Avantageusement, les angles α1 et α2 sont inférieurs ou égaux à 70 °. De cette manière, on s'assure que les rainures transversales 20A, 20B et les incisions transversales 30 sont suffisamment allongées et profondes pour générer du creux dans la bande de roulement et assurer une bonne adhérence. Dans un mode de réalisation préférentiel, l'angle α1 et/ou l'angle α2 est (sont) supérieur(s) ou égal(aux) à 30° et inférieur(s) ou égal(aux) à 35°. De cette manière on ajuste encore mieux l'équilibre entre la capacité d'évacuation de l'eau hors de la bande de roulement par les rainures transversales 20A, 20B et/ou les incisions transversales 30 et la nécessité de générer du creux dans cette bande de roulement. Dans un autre mode de réalisation particulier, l'angle α1 est sensiblement identique à l'angle α2. On assure ainsi une répartition de la rigidité encore plus uniforme dans le bloc de gomme.

La figure 4 illustre un second mode de réalisation dans lequel le pneumatique comporte une incision intermédiaire 28 reliant la première paroi inclinée 26 de la rainure transversale 20B à la rainure circonférentielle 14. Plus particulièrement, l'incision intermédiaire 28 fait une trace 28A sur la surface de la bande de roulement 10 et une trace 28B, prolongeant la trace 28A, sur la première paroi inclinée 26. La trace 28B s'étend partiellement sur cette première paroi inclinée 26. La profondeur de l'incision intermédiaire 28 est limitée de sorte à ne pas diminuer de manière trop importante la rigidité du bloc de gomme. Avantageusement, la profondeur de l'incision intermédiaire est inférieure ou égale à 25% de la profondeur P de la rainure circonférentielle 14. La largeur de l'incision intermédiaire est comprise entre 0,4 mm et 1 mm. Préférentiellement cette largeur est comprise entre 0,6 mm et 0,8 mm.

La figure 5 illustre un troisième mode de réalisation, dans lequel le pneumatique comprend au moins un plot de contact 38 faisant protubérance à partir d'une paroi latérale de l'incision transversale 30. Ce plot de contact 38 favorise la mise en contact des parois latérales de l'incision transversale dans l'aire de contact. Le choix du nombre de plots de contact 38 et/ou de l'importance de la surface de contact du plot de contact 38 permet(tent) d'affiner la rigidité dans le bloc de gomme. Dans le mode de réalisation de la figure 5, le plot de contact 38 est situé dans la partie supérieure de l'incision transversale 30 de sorte que le barycentre 39 de ce plot de contact 38 est, selon la direction radiale Z et dans le plan de coupe radial A-A, au-dessus du point 37 de rencontre entre la première paroi inclinée 26 et la seconde paroi inclinée 36. L'invention n'est pas limitée aux exemples décrits et représentés et diverses modifications peuvent y être apportées sans sortir de son cadre.

Ainsi, selon l'exemple de la figure 1, toutes les rainures transversales comportent une première paroi inclinée. Dans une variante de réalisation non limitative, seule une partie de rainures transversales comporte une première paroi inclinée. Avantageusement, la présence des rainures transversales comportant une première paroi inclinée est alternée avec des rainures transversales ne comportant pas de telle paroi inclinée. Ainsi pour une incision transversale encadrée par deux rainures transversales adjacentes, une seule de ces rainures transversales adjacentes comporte une première paroi inclinée.

Selon une autre variante de réalisation, le nombre d'incisions transversales compris entre deux rainures transversales adjacentes d'un bloc de gomme est supérieur à 1. Chacune des incisions transversales peut alors présenter une seconde paroi inclinée qui croise les premières parois inclinées des rainures transversales. Ces secondes parois inclinées peuvent présenter la même inclinaison. En variante, ces secondes parois inclinées présentent des inclinaisons différentes.

Selon une variante de réalisation, la pluralité de rainures transversales comprend au moins trois types de rainures transversales présentant trois largeurs différentes. La différence entre ces différentes largeurs est d'au moins 15 %.

Selon une variante de réalisation, les premières parois inclinées 26 des rainures transversales 20A, 20B ne s'étendent pas jusqu'à la surface de roulement de la bande de roulement 10. Chaque rainure transversale 20A, 20B comporte alors un fond qui rejoint la première extrémité 22 en formant la paroi inclinée 26 et une troisième partie qui relie ladite paroi inclinée 26 à la surface de roulement de la bande de roulement 10. Cette troisième partie peut-être inclinée. En variante, cette troisième partie est rectiligne.

A la figure 3, le plan de coupe radial A-A est confondu avec le plan moyen de l'incision transversale 30. Dans une variante de réalisation de l'invention, le plan de coupe radial A-A peut être confondu avec le plan moyen d'une rainure transversale 20A, 20B. Dans une autre variante de réalisation de l'invention, ce plan de coupe radial A-A s'étend dans la matière caoutchoutique entre l'incision transversale 30 et une rainure transversale 20A, 20B. ;

## Revendications

1. Pneumatique comportant une bande de roulement (10) délimitée par deux bords (12A, 12B), ladite bande de roulement (10) comprenant une rainure circonférentielle (14) et une pluralité de rainures transversales (20A, 20B), chaque rainure transversale (20A, 20B) s'étendant d'un des bords (12A, 12B) de la bande de roulement (10) jusqu'à une première extrémité (22) de ladite rainure transversale (20A, 20B), au moins une rainure transversale (20A) de la pluralité de rainures transversales (20A, 20B) comporte un fond rejoignant la première extrémité (22) en formant une première paroi inclinée (26), ladite bande de roulement (10) comprenant une incision transversale (30) disposée entre deux rainures transversales (20A, 20B), ladite incision transversale (30) s'étendant à partir de la rainure circonférentielle (14) jusqu'à une seconde extrémité (32) de ladite incision transversale (30), **caractérisé en ce que** ladite incision transversale (30) comporte un fond rejoignant ladite seconde extrémité (32) en formant une seconde paroi inclinée (36), ladite seconde paroi inclinée (36) croisant ladite première paroi inclinée (26) dans un plan de coupe radial (A-A) et selon une projection desdites parois inclinées (26, 36) dans ce plan de coupe radial (A-A), par «plan de coupe radial», on entend ici tout plan s'étendant selon une direction radiale et selon une direction transversale et passant par l'axe de rotation du pneumatique et par « projection » de la paroi inclinée selon un plan de coupe radial, on entend une projection orthogonale de cette paroi inclinée dans ce plan de coupe selon une certaine distance de projection.

2. Pneumatique selon la revendication 1 **caractérisé en ce que** la première paroi inclinée (26) et la seconde paroi inclinée (36) se croisent à une hauteur H déterminée par rapport à une surface de roulement de la bande de roulement (10), avec 0,2*P≤H≤0,8*P, préférentiellement 0,3*P≤H≤0,7*P et plus préférentiellement 0,4*P≤H≤0,6*P, où P est la profondeur de la rainure circonférentielle.

3. Pneumatique selon l'une des revendications 1 ou 2, **caractérisé en ce que** la première paroi inclinée (26) et la seconde paroi inclinée (36) font respectivement un angle α1 et un angle α2 avec une direction transversale, l'angle α1 et l'angle α2 étant supérieurs ou égaux à 20° et inférieurs ou égaux à 70°.

4. Pneumatique selon la revendication précédente, **caractérisé en ce que** l'angle α1 et/ou l'angle α2 est (sont) supérieur(s) ou égal(aux) à 30° et inférieur(s) ou égal(aux) à 35°.

5. Pneumatique selon l'une des revendications 3 ou 4, **caractérisé en ce que** l'angle α1 est sensiblement identique à l'angle α2.

6. Pneumatique selon l'une quelconque des revendications précédentes, **caractérisé en ce que** ledit pneumatique comporte une incision intermédiaire (28) reliant la première paroi inclinée (26) de la rainure transversale à la rainure circonférentielle (14).

7. Pneumatique selon la revendication précédente, **caractérisé en ce que** ladite incision intermédiaire (28) a une profondeur inférieure ou égale à 25% de la profondeur P de la rainure circonférentielle (14).

8. Pneumatique selon l'une quelconque des revendications 1 à 7, **caractérisé en ce que** la pluralité des rainures transversales (20A, 20B) a une largeur comprise entre 3,5 mm et 5,5 mm.

9. Pneumatique selon la revendication 8, **caractérisé en ce que** la pluralité de rainures transversales (20A, 20B) comprend au moins deux types de rainures transversales présentant deux largeurs différentes, la différence entre ces deux largeurs étant d'au moins 15 %.

10. Pneumatique selon l'une quelconque des revendications 1 à 9, **caractérisé en ce que** l'incision transversale (30) a une largeur comprise entre 0,4 mm et 1,2 mm, préférentiellement entre 0,6 mm et 0,8 mm.

11. Pneumatique selon l'une quelconque des revendications 1 à 10, **caractérisé en ce que** ledit pneumatique comporte au moins un plot de contact (38) faisant protubérance à partir d'une paroi latérale de l'incision transversale (30).

12. Pneumatique selon l'une quelconque des revendications 1 à 11, **caractérisé en ce que** ledit pneumatique est un pneumatique pour véhicule de tourisme ou pour camionnette, de préférence pour camionnette, ;

## Patentansprüche

1. Reifen, welcher einen Laufstreifen (10) aufweist, der von zwei Rändern (12A, 12B) begrenzt wird, wobei der Laufstreifen (10) eine Umfangsrille (14) und mehrere Querrillen (20A, 20B) umfasst, wobei sich jede Querrille (20A, 20B) von einem der Ränder (12A, 12B) des Laufstreifens (10) bis zu einem ersten Ende (22) der Querrille (20A, 20B) erstreckt, wobei wenigstens eine Querrille (20A) der mehreren Querrillen (20A, 20B) einen Boden aufweist, der auf das erste Ende (22) zuläuft, indem er eine erste geneigte Wand (26) bildet, wobei der Laufstreifen (10) einen Quereinschnitt (30) umfasst, der zwischen zwei Querrillen (20A, 20B) angeordnet ist, wobei sich der Quereinschnitt (30) von der Umfangsrille (14) aus bis zu einem zweiten Ende (32) des Quereinschnitts (30) erstreckt, **dadurch gekennzeichnet, dass** der Quereinschnitt (30) einen Boden aufweist, der auf das zweite Ende (32) zuläuft, indem er eine zweite geneigte Wand (36) bildet, wobei die zweite geneigte Wand (36) die erste geneigte Wand (26) in einer radialen Schnittebene (A-A) und entlang einer Projektion der geneigten Wände (26, 36) auf diese radiale Schnittebene (A-A) kreuzt, wobei unter "radialer Schnittebene" hier jede Ebene verstanden wird, die sich in einer radialen Richtung und in einer Querrichtung erstreckt und durch die Drehachse des Reifens verläuft, und unter "Projektion" der geneigten Wand auf eine radiale Schnittebene eine orthogonale Projektion dieser geneigten Wand auf diese Schnittebene entlang eines gewissen Projektionsabstands verstanden wird.

2. Reifen nach Anspruch 1, **dadurch gekennzeichnet, dass** sich die erste geneigte Wand (26) und die zweite geneigte Wand (36) auf einer in Bezug auf eine Lauffläche des Laufstreifens (10) bestimmten Höhe H kreuzen, mit 0,2*P ≤ H ≤ 0,8*P, vorzugsweise 0,3*P < H < 0,7*P und stärker bevorzugt 0,4*P ≤ H ≤ 0,6*P, wobei P die Tiefe der Umfangsrille ist.

3. Reifen nach einem der Ansprüche 1 oder 2, **dadurch gekennzeichnet, dass** die erste geneigte Wand (26) und die zweite geneigte Wand (36) einen Winkel α1 bzw. einen Winkel α2 mit einer Querrichtung bilden, wobei der Winkel α1 und der Winkel α2 größer oder gleich 20° und kleiner oder gleich 70° sind.

4. Reifen nach dem vorhergehenden Anspruch, **dadurch gekennzeichnet, dass** der Winkel α1 und/oder der Winkel α2 größer oder gleich 30° und kleiner oder gleich 35° sind (ist).

5. Reifen nach einem der Ansprüche 3 oder 4, **dadurch gekennzeichnet, dass** der Winkel α1 im Wesentlichen mit dem Winkel α2 identisch ist.

6. Reifen nach einem der vorhergehenden Ansprüche, **dadurch gekennzeichnet, dass** der Reifen einen Zwischeneinschnitt (28) aufweist, der die erste geneigte Wand (26) der Querrille mit der Umfangsrille (14) verbindet.

7. Reifen nach dem vorhergehenden Anspruch, **dadurch gekennzeichnet, dass** der Zwischeneinschnitt (28) eine Tiefe aufweist, die kleiner oder gleich 25 % der Tiefe P der Umfangsrille (14) ist.

8. Reifen nach einem der Ansprüche 1 bis 7, **dadurch gekennzeichnet, dass** die mehreren Querrillen (20A, 20B) eine Breite zwischen 3,5 mm und 5,5 mm aufweisen.

9. Reifen nach Anspruch 8, **dadurch gekennzeichnet, dass** die mehreren Querrillen (20A, 20B) wenigstens zwei Arten von Querrillen umfassen, die unterschiedliche Breiten aufweisen, wobei der Unterschied zwischen diesen zwei Breiten wenigstens 15 % beträgt.

10. Reifen nach einem der Ansprüche 1 bis 9, **dadurch gekennzeichnet, dass** der Quereinschnitt (30) eine Breite zwischen 0,4 mm und 1,2 mm, vorzugsweise zwischen 0,6 mm und 0,8 mm aufweist.

11. Reifen nach einem der Ansprüche 1 bis 10, **dadurch gekennzeichnet, dass** der Reifen wenigstens ein Kontaktstück (38) aufweist, das von einer Seitenwand des Quereinschnitts (30) vorsteht.

12. Reifen nach einem der Ansprüche 1 bis 11, **dadurch gekennzeichnet, dass** der Reifen ein Reifen für einen Personenkraftwagen oder für einen Lieferwagen ist, vorzugsweise für einen Lieferwagen.

## Claims

1. Tyre having a tread (10) delimited by two edges (12A, 12B), said tread (10) comprising a circumferential groove (14) and a plurality of transverse grooves (20A, 20B), each transverse groove (20A, 20B) extending from one of the edges (12A, 12B) of the tread (10) as far as a first end (22) of said transverse groove (20A, 20B), at least one transverse groove (20A) of the plurality of transverse grooves (20A, 20B) having a bottom that meets the first end (22), forming a first inclined wall (26), said tread (10) comprising a transverse sipe (30) disposed between two transverse grooves (20A, 20B), said transverse sipe (30) extending from the circumferential groove (14) as far as a second end (32) of said transverse sipe (30), **characterized in that** said transverse sipe (30) has a bottom that meets said second end (32), forming a second inclined wall (36), said second inclined wall (36) crossing said first inclined wall (26) in a radial section plane (A-A) and along a projection of said inclined walls (26, 36) in this radial section plane (A-A), Here, a "radial section plane" means any plane extending in a radial direction and in a transverse direction and passing through the axis of rotation of the tyre, and a "projection" of the inclined wall on a radial section plane means an orthogonal projection of this inclined wall in this section plane over a certain projection distance.

2. Tyre according to Claim 1, **characterized in that** the first inclined wall (26) and the second inclined wall (36) cross at a determined height H with respect to a tread surface of the tread (10), with 0.2*P≤H≤0.8*P, preferentially 0.3*P≤H≤0.7*P and more preferentially 0.4*P≤H≤0.6*P, where P is the depth of the circumferential groove.

3. Tyre according to either of Claims 1 and 2, **characterized in that** the first inclined wall (26) and the second inclined wall (36) respectively form an angle α1 and an angle α2 with a transverse direction, the angle α1 and the angle α2 being greater than or equal to 20° and less than or equal to 70°.

4. Tyre according to the preceding claim, **characterized in that** the angle α1 and/or the angle α2 is (are) greater than or equal to 30° and less than or equal to 35°.

5. Tyre according to either of Claims 3 and 4, **characterized in that** the angle α1 is substantially identical to the angle α2.

6. Tyre according to any one of the preceding claims, **characterized in that** said tyre has an intermediate sipe (28) connecting the first inclined wall (26) of the transverse groove to the circumferential groove (14).

7. Tyre according to the preceding claim, **characterized in that** said intermediate sipe (28) has a depth of less than or equal to 25% of the depth P of the circumferential groove (14).

8. Tyre according to any one of Claims 1 to 7, **characterized in that** the plurality of transverse grooves (20A, 20B) has a width of between 3.5 mm and 5.5 mm.

9. Tyre according to Claim 8, **characterized in that** the plurality of transverse grooves (20A, 20B) comprises at least two types of transverse grooves having two different widths, the difference between these two widths being at least 15%.

10. Tyre according to any one of Claims 1 to 9, **characterized in that** the transverse sipe (30) has a width of between 0.4 mm and 1.2 mm, preferentially between 0.6 mm and 0.8 mm.

11. Tyre according to any one of Claims 1 to 10, **characterized in that** said tyre has at least one contact pad (38) protruding from a lateral wall of the transverse sipe (30).

12. Tyre according to any one of Claims 1 to 11, **characterized in that** said tyre is a tyre for a passenger vehicle or for a van, preferably for a van.
